(19) Europäisches Patentamt
European Patent Office
Office européen des brevets

(11) **EP 4 480 886 A1**

(12) **EUROPEAN PATENT APPLICATION**
published in accordance with Art. 153(4) EPC

(43) Date of publication:
**25.12.2024 Bulletin 2024/52**

(21) Application number: **23756284.8**

(22) Date of filing: **09.02.2023**

(51) International Patent Classification (IPC):
**B66D 1/54** (2006.01)

(52) Cooperative Patent Classification (CPC):
**B66D 1/54**

(86) International application number:
**PCT/JP2023/004418**

(87) International publication number:
**WO 2023/157758 (24.08.2023 Gazette 2023/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.02.2022 JP 2022021546**

(71) Applicant: **TADANO LTD.**
**Takamatsu-shi, Kagawa 761-0185 (JP)**

(72) Inventor: **OSOSINSKI, Marek**
**Takamatsu-shi, Kagawa 761-0185 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **MISWINDING DETECTION DEVICE AND MISWINDING DETECTION METHOD**

(57) Provided are a miswinding detection device and a miswinding detection method that make it possible to quickly and accurately detect miswinding. A miswinding detection device (1) has an outline detection unit (12) that detects the outline of a wire rope (3) in the rotation axis direction of a drum (2) in a captured image of the wire rope (3) as wound on the drum (2) and a determination unit (15) that calculates the degree of change in the detected outline in the radial direction of the drum (2) and determines miswinding of the wire rope (3) based on the magnitude of the calculated degree of change.

*FIG. 1*

EP 4 480 886 A1

## Description

Technical Field

The present invention relates to a miswinding detection device and a miswinding detection method.

Background Art

A state in which the wire rope wound around the drum of the winch is not aligned is referred to as miswinding. Since a large tension is applied to the wire rope for hanging the cargo of the crane, there is a possibility that the wire rope may be damaged if the operation is continued in a state where the miswinding has occurred. Therefore, a technique for preventing or detecting miswinding has been proposed.

The winch facility disclosed in Patent Literature 1 synchronizes the movement of the winding guide and the movement of the winch such that the wire rope is wound up from a direction orthogonal to the rotation axis of the drum.

The winch disclosed in Patent Literature 2 is provided with a limit switch in the vicinity of a wire rope wound around a drum, and the wire rope comes into contact with the limit switch to detect miswinding.

Citation List

Patent Literature

Patent Literature 1: JP 2002-87763 A
Patent Literature 2: JP 6-27873 A

Summary of the Invention

Problems to be Solved by the Invention

The winch facility disclosed in Patent Literature 1 is provided with a mechanism that hardly causes miswinding. However, this facility is not provided with a function of detecting that miswinding has actually occurred.

The winch disclosed in Patent Literature 2 detects the magnitude of the swing angle of the wire rope with respect to the drum. However, this winch does not directly detect that miswinding has occurred in the drum. In addition, when the allowable range of the limit switch is wide, the detection of the miswinding is delayed, and when the allowable range of the limit switch is too narrow, the miswinding is excessively detected, which causes a work delay. In addition, when the wire rope does not touch the limit switch, the miswinding cannot be detected. In this case, in a case where the wire rope is loosened in a direction different from the limit switch, it is difficult to detect the miswinding.

An object of the present invention is to provide a miswinding detection device and a miswinding detection method capable of quickly and accurately detecting occurrence of miswinding.

Solutions to Problems

An aspect of a miswinding detection device according to the present invention includes
an outline detection unit that detects, in a captured image of a wire rope wound around a drum, an outline of the wire rope extending in a direction of a rotation axis of the drum; and a determination unit that calculates a degree of change in the detected outline in a radial direction of the drum, and determine occurrence of miswinding of the wire rope based on a magnitude of the calculated degree of change.

An aspect of a miswinding detection method according to the present invention is executed by a miswinding detection device, the miswinding detection method including

an outline detection step of detecting, in a captured image of a wire rope wound around a drum, an outline of the wire rope extending in a direction of a rotation axis of the drum, and
a determination step of calculating a degree of change in the detected outline in a radial direction of the drum, and determining occurrence of miswinding of the wire rope based on a magnitude of the calculated degree of change.

Effects of the Invention

According to the present invention, it is possible to quickly and accurately detect the occurrence of miswinding.

Brief Description of Drawings

Fig. 1 is a schematic diagram illustrating a functional configuration of a miswinding detection device according to a first embodiment of the present invention.
Fig. 2 is a view illustrating an example of an image captured by an imaging device.
Fig. 3 is a view illustrating an example of a change in luminance of a pixel in a perpendicular line.
Fig. 4 is a view illustrating a state in which a scanning window is scanned.
Fig. 5A is a diagram illustrating a boundary box. Fig. 5B is a diagram illustrating an example of a plurality of boundary boxes having different rotation angles generated from the same partial region PA.
Fig. 6 is a block diagram illustrating a hardware configuration of the miswinding detection device in Fig. 1.

Fig. 7 is a flowchart illustrating an operation of the miswinding detection device of Fig. 1.

Figs. 8A to 8F are schematic diagrams illustrating movement of a scanning window and a generated boundary box.

Figs. 9A and 9B are schematic diagrams illustrating a state in which miswinding has occurred.

Fig. 10 is a schematic diagram illustrating a functional configuration of a miswinding detection device according to a second embodiment of the present invention.

Description of Embodiments

Hereinafter, embodiments of the present invention will be described in detail with reference to the drawings. In the drawings, the same or equivalent portions are denoted by the same reference numerals.

(First embodiment)

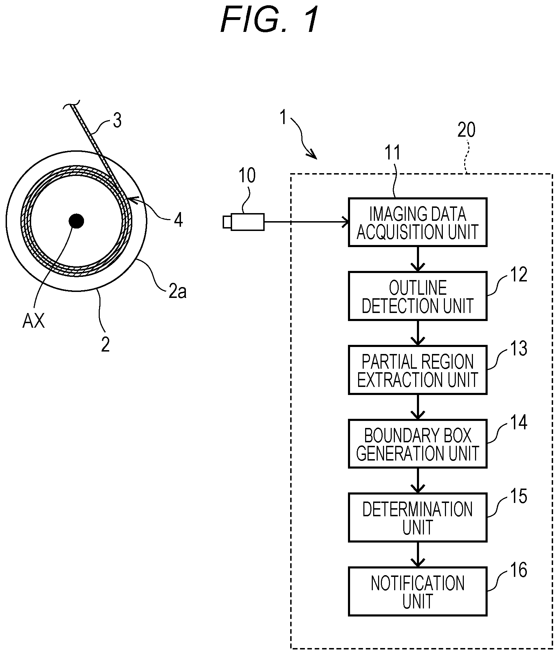

First, the first embodiment of the present invention will be described. As illustrated in Fig. 1, a miswinding detection device 1 according to the present embodiment detects that miswinding has occurred in which a wire rope 3 wound around a drum 2 of the winch is not aligned. The wire rope 3 wound around the drum 2 extends to a hook for hanging a cargo via a guide sheave and a top sheave (not illustrated). In Fig. 1, the drum 2 is shown in cross section.

[Overall configuration]

The miswinding detection device 1 includes an imaging device 10 as an imaging unit, and an image processing device 20 that performs an image process on imaging data imaged by the imaging device 10 and detects that miswinding has occurred.

[Imaging device]

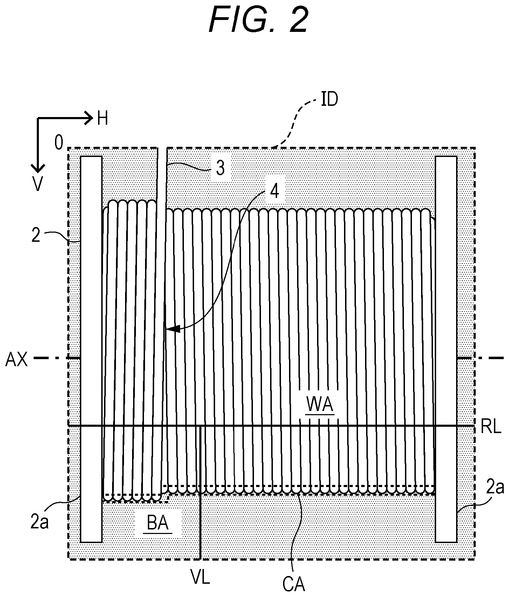

The imaging device 10 is disposed in a direction intersecting with the rotation axis direction in which the rotation axis AX of the drum 2 extends. The imaging device 10 captures an image of the wire rope 3 wound around the drum 2. Fig. 2 illustrates an example of an imaging data ID of this image. As illustrated in Fig. 2, the entire drum 2 around which the wire rope 3 is wound is accommodated in the imaging field of view of the imaging device 10. However, the present invention is not limited thereto, and the imaging field of view of the imaging device 10 may include an entire outline region CA extending in the direction of a rotation axis AX of the wire rope 3 wound around the drum 2.

In addition, in order to quickly detect the miswinding, it is desirable that the winding position 4 of the drum 2 around which the wire rope 3 is wound be within the imaging field of view of the imaging data ID. However, the present invention is not limited thereto, and the position of the imaging device 10 with respect to the drum 2 is arbitrary.

The imaging device 10 captures a moving image of the wire rope 3 wound around the drum 2. At the frame rate of the moving image, for example, the imaging data ID of 30 frames per second is generated. Furthermore, the imaging device 10 may capture the imaging data ID of a still image at regular intervals. For example, setting can be made such that a certain number of pieces of imaging data, for example, four pieces of imaging data are imaged during the time when the drum 2 rotates once.

As illustrated in Fig. 2, the imaging data ID is data of a rectangular image as a whole configured by disposing a plurality of pixels in a two-dimensional plane. In the imaging data ID, an axis extending in the horizontal direction is defined as an H axis, and an axis extending in the perpendicular direction is defined as a V axis. In the present embodiment, the positional relationship between the drum 2 and the imaging device 10 is fixed such that the direction of the rotation axis AX of the drum 2 coincides with the H axis. Since the positional relationship between the two is fixed, the positions of flanges 2a provided at both ends of the rotation axis AX of the drum 2 in the imaging data ID are known. There may be a slight angular deviation between the direction of the rotation axis AX of the drum 2 and the H axis. In the following image processing, it is assumed that this angular deviation is calibrated.

The imaging data ID may be data of a color image or data of a monochrome image. Any image may be used as long as the data of the image can detect the outline region CA of the wire rope 3 wound around the drum 2 based on the change in luminance.

[Image processing device]

Returning to Fig. 1, the image processing device 20 includes an imaging data acquisition unit 11, an outline detection unit 12, a partial region extraction unit 13, a boundary box generation unit 14, a determination unit 15, and a notification unit 16.

[Imaging data acquisition unit]

As illustrated in Fig. 2, the imaging data acquisition unit 11 acquires the imaging data ID of the image captured by the imaging device 10. As described above, in a case where the frame rate constituting the moving image captured by the imaging device 10 is 30 frames per second, the imaging data acquisition unit 11 takes in the imaging data ID every time the drum 2 rotates by a certain angle, for example, 90 degrees, partially overlapping each other, during the time when the drum 2 rotates once. Accordingly, a certain number of imaging data IDs, for example, four imaging data IDs are acquired during the time when the drum 2 rotates once. Furthermore, in a case where the imaging device 10 captures a still image, the imaging data acquisition unit 11 may transmit an imaging instruction to the imaging device 10 at regular intervals and receive the imaging data ID from the imaging device 10.

The imaging data acquisition unit 11 may not acquire the imaging data ID in synchronization with the rotation of the drum 2. For example, in a case where the drum 2 rotates at the maximum rotation speed, the imaging data ID may be acquired at a constant cycle of a speed at which a plurality of imaging data IDs partially overlapping each other and covering the entire circumference of the drum 2 is acquired during the time when the drum 2 rotates once.

[Outline detection unit]

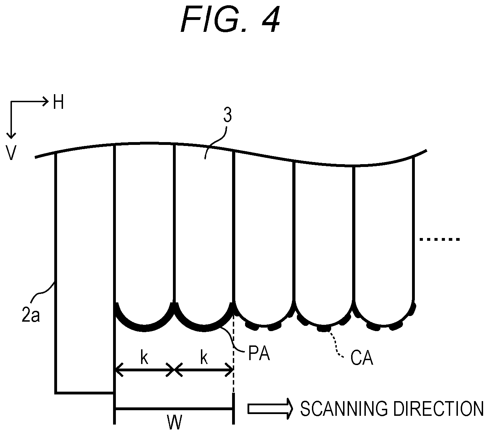

As illustrated in Fig. 2, the outline detection unit 12 detects the outline region CA extending in the direction of the rotation axis AX of the wire rope 3 wound around the drum 2 from the imaging data captured by the imaging device 10. The outline region CA is an example of an outline of the wire rope 3 subjected to the miswinding detection process. In the present embodiment, the outline region CA includes pixels corresponding to the coordinate position of the outline of the wire rope 3 and does not include pixels not corresponding to the coordinate position of the outline in the imaging data of the captured image of the drum 2 around which the wire rope 3 is wound. Therefore, the outline region CA extends in the direction of the rotation axis AX of the drum 2 (H axis direction) as a whole, but specifically, has a non-linear shape such as a waveform shape (also referred to as a bellows shape) in which the coordinate position of the drum in the radial direction (V axis direction) fluctuates up and down (see Fig. 4 and the like). The detection of the outline region CA by the outline detection unit 12 is performed as follows. First, the outline detection unit 12 determines a reference line RL extending in the horizontal direction, that is, the H axis direction in the imaging data ID. The position of the reference line RL on the V axis is arbitrary, but it is necessary to set the reference line RL to a position that is obviously not in the outline region CA. For example, a line extending in the H axis direction at a position of 2/3 of the entire width of the imaging data ID in the V axis direction can be set as the reference line RL.

Subsequently, the outline detection unit 12 determines a perpendicular line VL extending in the perpendicular direction from the reference line RL in the imaging data ID as illustrated in Fig. 2. Then, the outline detection unit 12 obtains a change in luminance of each pixel on the perpendicular line VL. As illustrated in Fig. 2, the perpendicular line VL extends accross a rope region WA of the wire rope 3 and a background region BA on the back side of the drum 2.

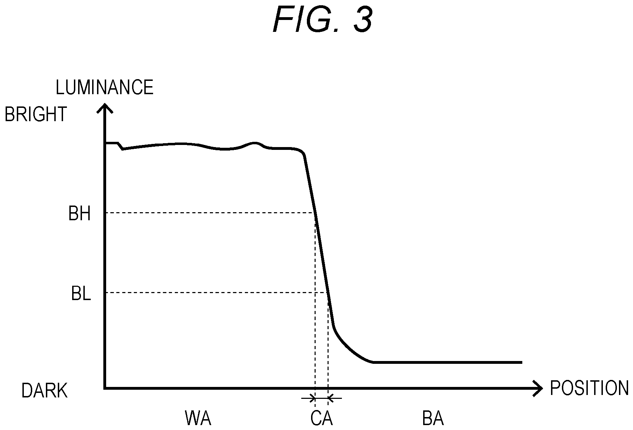

As illustrated in Fig. 3, in the imaging data ID, the luminance is high in the rope region WA of the wire rope 3, and the luminance is low in the background region BA. In the outline region CA of the wire rope 3, the luminance value rapidly changes. The outline detection unit 12 detects the outline region CA of the wire rope 3 based on the change in luminance. For example, as illustrated in Fig. 3, a set of pixels having a luminance value between a threshold value BH having a higher luminance value and a threshold value BL having a lower luminance value can be detected as the outline region CA.

In the imaging data ID, the outline detection unit 12 draws a perpendicular line VL from each pixel on the reference line RL and detects the outline region CA based on a change in luminance at the perpendicular line VL. As a result, the outline region CA extending in the direction of the rotation axis AX of the drum 2 is generated.

[Partial region extraction unit]

As illustrated in Fig. 4, the partial region extraction unit 13 defines a scanning window W having a certain length in the direction of the rotation axis AX with respect to the outline region CA detected by the outline detection unit 12. In the present embodiment, the length of the scanning window W is 2k where the number of pixels of the imaging data ID corresponding to the diameter of the wire rope 3 is k. The partial region extraction unit 13 extracts a partial region PA included in a section corresponding to the scanning window W from the outline region CA. The partial region extraction unit 13 scans the scanning window W in the direction of the rotation axis AX. For example, the scanning window W is shifted by one pixel from the left end of the outline region CA. The partial region extraction unit 13 extracts a partial region PA included in a section corresponding to the scanning window W each time the scanning window W is shifted.

[Boundary box generation unit]

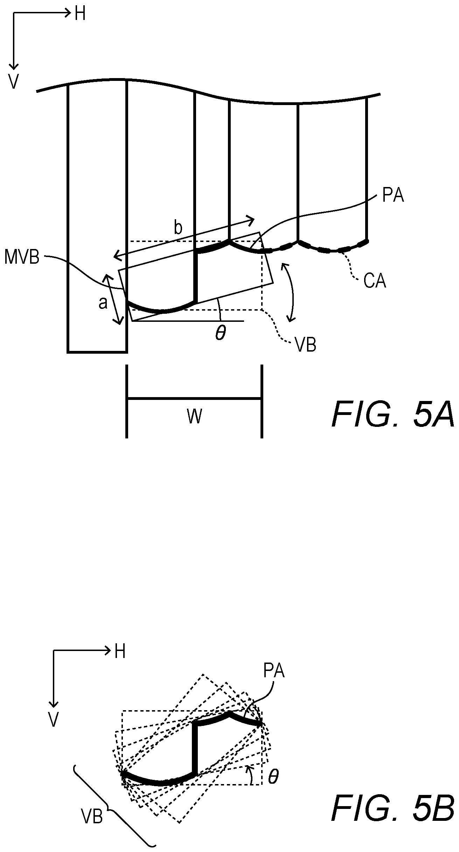

As illustrated in Figs. 5A and 5B, the boundary box generation unit 14, each time the partial region PA is extracted by the partial region extraction unit 13, generates a minimum boundary box MVB having the smallest area among the boundary boxes VB each including the extracted partial region PA and having a rectangular shape rotatable in the two-dimensional plane of the imaging data ID. In the present embodiment, the boundary box VB is a rectangle in which the length of the short side (the vertically extending side at the time of the first extraction) of the generated minimum boundary box MVB is a, and the length of the long side (the horizontally extending side at the time of the first extraction) is b (b > a). The rectangle is an example of a normalized shape used to simplify the mode of change in the outline region CA in the direction of the V axis (corresponding to the radial direction of the drum 2). By using such a normalized shape, it is possible to simplify the calculation of the degree of change in the outline region CA in the direction of the V axis and the comparison with the reference value, and thus, it is possible to suppress an increase in the load of the hardware of the image processing device 20 and to easily secure the accuracy of the miswinding detection.

In the plurality of boundary boxes VB generated for the partial region PA in one extraction, the angles (rotation angles θ) formed by the long sides (sides of the length b) of the rectangle with the direction of the H axis (the direction in which the outline region CA and the partial region PA extend) are different from each other. In addition, each of the plurality of boundary boxes VB includes the partial region PA in a state where an unnecessary peripheral region is not included, but includes the partial region PA in which the length in the H axis direction is always constant (the length 2k of the scanning window W), and thus, the length a of the short side and the length b of the long side of the boundary box VB change with the rotation (that is, the change in the rotation angle θ). As a result, the areas of the plurality of boundary boxes VB change depending on the rotation angle θ. The boundary box generation unit 14 selects one boundary box having the smallest area as the minimum boundary box MVB among the plurality of boundary boxes VB having the areas changed with the rotation angle θ generated in this manner.

[Determination unit]

The determination unit 15 determines whether miswinding occurs in the wire rope 3 based on the area of the minimum boundary box MVB generated by the boundary box generation unit 14. Here, the area of the minimum boundary box MVB is a×b. In a case where a×b satisfies the following inequality, the determination unit 15 determines that miswinding has occurred in the wire rope 3.

$$a \times b > 2 \times k \times k$$

The right side of the inequality is an area of a rectangle in which the length of the scanning window W is a horizontal length and the diameter of the wire rope 3 is a vertical length.

[Notification unit]

In a case where the determination unit 15 determines that miswinding has occurred in the wire rope 3, the notification unit 16 notifies the operator that miswinding has occurred in the wire rope 3. The notification unit 16 includes an alarm device, a warning light, or a display apparatus, and for example, causes the alarm device to sound, causes the warning light to light or blink, or displays on the display apparatus that miswinding has occurred. Instead of or in addition to the notification, the notification unit 16 may instruct a control device (not illustrated) to stop the drum 2.

In the present embodiment, in a case where the state in which the determination unit 15 determines that the size of the minimum boundary box MVB exceeds 2×k×k continues for a certain period of time, the notification unit 16 makes a notification that miswinding has occurred in the wire rope 3. However, the notification unit 16 may make a notification that miswinding has occurred in the wire rope 3 in a case where the determination unit 15 determines that the miswinding has occurred in the wire rope 3 even once.

[Hardware configuration]

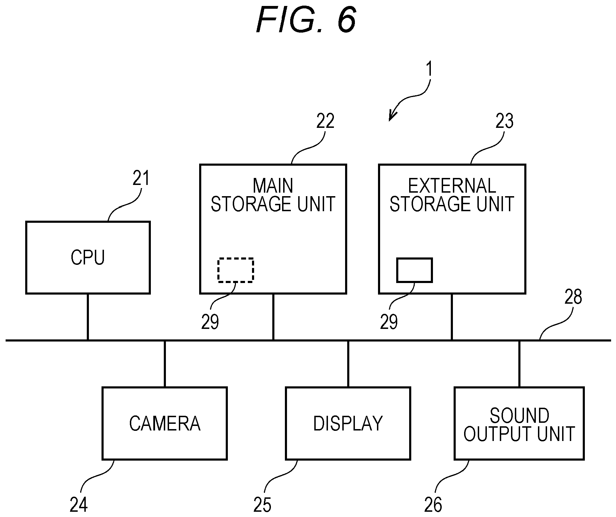

The miswinding detection device 1 illustrated in Fig. 1 is realized, for example, by a computer having a hardware configuration illustrated in Fig. 6 realizing a software program.

Specifically, the miswinding detection device 1 includes a central processing unit (CPU) 21 that controls the entire device, a main storage unit 22 that operates as a work area or the like of the CPU 21, an external storage unit 23 that stores an operation program or the like of the CPU 21, a camera 24, a display 25, a sound output unit 26, and an internal bus 28 that connects these components.

The CPU 21 is a processor (arithmetic device) that executes a software program (hereinafter, it is simply referred to as a "program"). The main storage unit 22 reads a program 29 from the external storage unit 23. The CPU 21 executes the program 29 stored in the main storage unit 22. Thus, the functions of the imaging data acquisition unit 11, the outline detection unit 12, the partial region extraction unit 13, the boundary box generation unit 14, the determination unit 15, and the notification unit 16 are realized.

The main storage unit 22 includes a random access memory (RAM) or the like. The program 29 of the CPU 21 is loaded into the main storage unit 22 from the external storage unit 23. The main storage unit 22 is also used as a work area (temporary storage area of data) of the CPU 21.

The external storage unit 23 includes a nonvolatile memory such as a flash memory or a hard disk. The external storage unit 23 stores in advance the program 29 to be executed by the CPU 21.

The camera 24 captures an image. The camera 24 can capture a still image or a moving image. The camera 24 corresponds to the imaging device 10.

The display 25 is a display device that displays an image. The sound output unit 26 performs sound output. The function of the notification unit 16 is realized by the display 25 and the sound output unit 26.

[Operation of miswinding detection device]

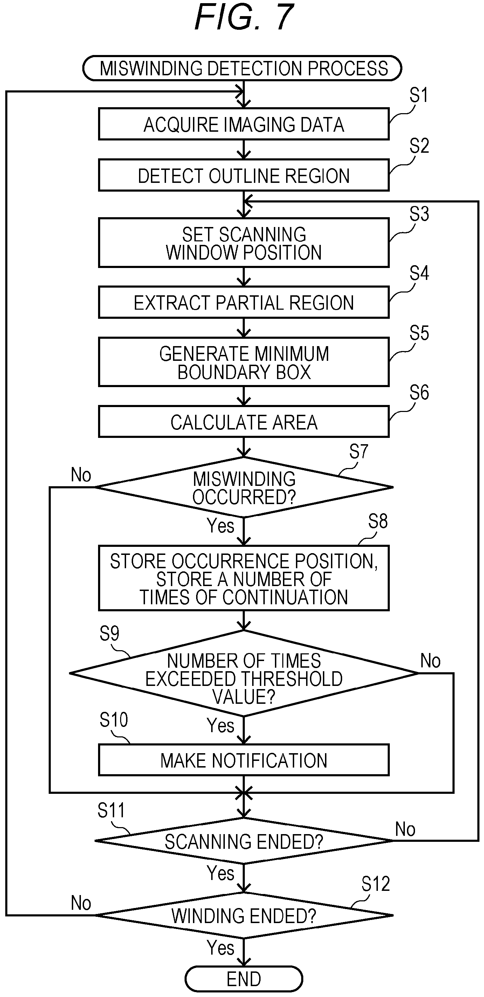

Next, the operation of the miswinding detection device 1 according to the first embodiment of the present invention, that is, the miswinding detection process for realizing the miswinding detection method will be described. When winding of the wire rope 3 around the drum 2 is started, the processing illustrated in the flowchart of Fig. 7 is started.

As illustrated in Fig. 7, first, the imaging data acquisition unit 11 acquires the imaging data ID of the image of the wire rope 3 wound around the drum 2 imaged by the imaging device 10 (step S1; an imaging data acquisition step). As a result, for example, as illustrated in Fig. 2, the imaging data ID of the wire rope 3 wound around the drum 2 is acquired.

Subsequently, the outline detection unit 12 detects the outline region CA extending in the rotation axis direction of the wire rope 3 wound around the drum 2 from the imaging data ID acquired in step S1 (step S2; outline detection step). Here, for example, as illustrated in Fig. 2, the reference line RL is drawn with respect to the imaging data ID, and the perpendicular line VL extending in the +V direction is drawn from each pixel on the reference line RL. Further, the outline region CA of the wire rope 3 illustrated in Fig. 2 is detected based on a change in luminance at each perpendicular line VL (see Fig. 3).

Subsequently, the partial region extraction unit 13 sets the position of the scanning window W having a certain length in the direction of the rotation axis AX with respect to the outline region CA detected in step S2 (step S3; scanning window position setting step). In the first processing in step S3, the partial region extraction unit 13 sets the scanning window W at the position of the left end (the most -H side) of the outline region CA as illustrated in Fig. 4. In step S3, the partial region extraction unit 13 shifts the position of the scanning window W in the +H direction pixel by pixel each time the process of step S3 is executed.

Subsequently, the partial region extraction unit 13 extracts a partial region PA included in a section corresponding to the scanning window W from the outline region CA (step S4; a partial region extracting step). Here, as illustrated in Fig. 4, a region corresponding to the scanning window W in the outline region CA is extracted as a partial region PA. In Fig. 4, the partial region PA is indicated by a solid thick line, and the outline region CA outside the partial region PA is indicated by a dotted thick line.

Subsequently, the boundary box generation unit 14 generates a minimum boundary box MVB having the smallest area among the boundary boxes VB each including the extracted partial region PA and having a rectangular shape rotatable in the two-dimensional plane of the imaging data ID (step S5; minimum boundary box generation step). Here, as illustrated in Fig. 5A, the boundary box generation unit 14 generates a plurality of boundary boxes VB that include the partial region PA and have different rotation angles $\theta$ with respect to the H axis. Note that the boundary box VB is assumed to be a boundary box VB having a minimum area including the partial region PA at the angle $\theta$. Further, the boundary box generation unit 14 selects the boundary box VB having the minimum area as the minimum boundary box MVB from the boundary boxes VB having the minimum area at respective angles $\theta$.

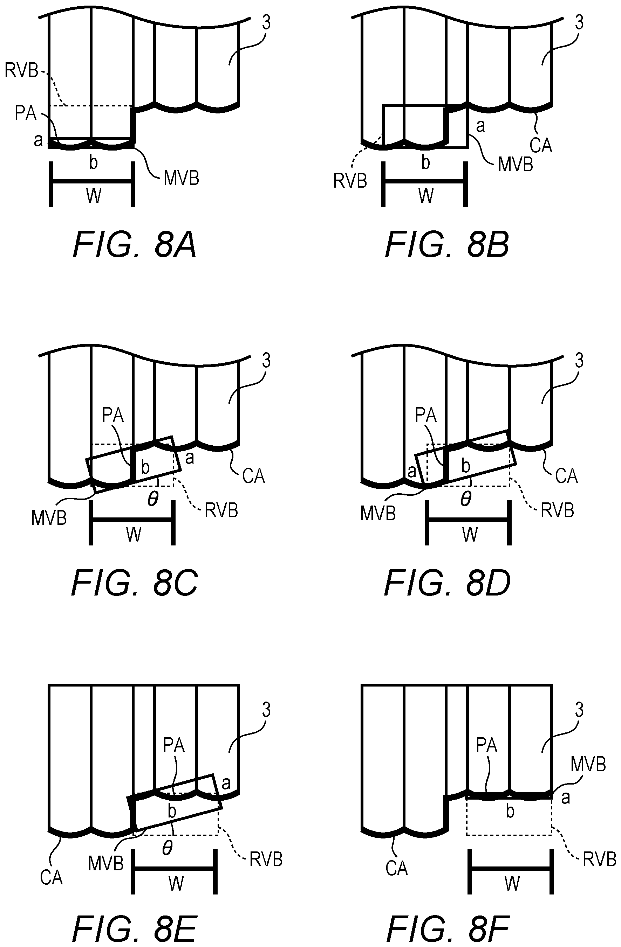

Subsequently, the determination unit 15 calculates the area of the minimum boundary box MVB generated in step S4 (step S6), and determines whether miswinding has occurred in the wire rope 3 based on the calculated area of the minimum boundary box MVB (step S7; a determination step). For example, as illustrated in Fig. 8A, in a case where the outline of the wire rope 3 corresponding to the scanning window W is regular, the boundary box VB generated from the partial region PA is minimum at the angle $\theta=0$, and the boundary box VB at $\theta=0$ is generated as the minimum boundary box MVB. The area of the minimum boundary box MVB is equal to or smaller than the area of a reference boundary box RVB having an area of $2 \times k \times k$ (an example of the reference area) to be compared. In this case, the determination unit 15 determines that no miswinding occurs in the wire rope 3.

In a case where it is determined that no miswinding has occurred (step S7; No), the image processing device 20 determines whether to end the scanning of the scanning window W (step S11). When the +H end of the scanning window W reaches the +H end of the drum 2, it is determined that the scanning is ended. In a case where the scanning is not finished (step S11; No), the image processing device 20 returns the process to step S3.

After returning from step S11, the partial region extraction unit 13 sets the position of the scanning window W with respect to the outline region CA detected in step S2 (step S3). In the second and subsequent processing in step S3, the partial region extraction unit 13 shifts the position of the scanning window W by one pixel in the +H direction from the current setting position of the scanning window W. Subsequently, the partial region extraction unit 13 extracts a partial region PA included in a section corresponding to the scanning window W from the outline region CA (step S4), and the boundary box generation unit 14 generates a minimum boundary box MVB (step S5). Further, the determination unit 15 calculates the area of the minimum boundary box MVB generated in step S4 (step S6), and determines whether miswinding has occurred in the wire rope 3 based on the calculated area (step S7). Further, in a case where the determination unit 15 determines that no miswinding has occurred (step S7; No), the image processing device 20 determines whether to end the scanning of the scanning window W (step S11). In a case where the scanning is not ended (step S11; No), the image processing device 20 returns the process to step S3.

As described above, unless the determination unit 15 determines that the miswinding has occurred (step S7; No), steps S3 to S7, and S11 are repeated, the partial region PA is extracted from the outline region CA detected from the imaging data ID, the area of the minimum boundary box MVB including the partial region PA is obtained, and the determination as to whether the miswinding has occurred is repeated.

In a case where the determination unit 15 determines that the miswinding has occurred (step S7; Yes), the determination unit 15 stores the position of the scanning window W where the miswinding has occurred and the number of times of continuation of occurrence of the miswinding at the position of the scanning window W where the miswinding has occurred (step S8), and determines whether the number of times of continuation of the occurrence exceeds a threshold value (step S9). When the number of times of continuation of the occurrence does not exceed the threshold value (step S9; No), the image processing device 20 advance the process to step S11.

As described above, for one imaging data ID, steps S3 to S7, S11 or steps S3 to S9, and S11 are repeated, and in a case where the miswinding has occurred, the position of the generated scanning window W and the number of times of continuation thereof are stored.

During this repetition, when the scanning of the scanning window W ends (step S11; Yes), the image processing device 20 determines whether the winding has been completed (step S12). Whether the winding has ended is determined by a signal output from a device for winding the wire rope 3. In a case where it is determined that the winding has not been completed (step S12; No), the image processing device 20 returns the process to step S1.

Thereafter, acquisition of a new imaging data ID (step S1), detection of the outline region CA (step S2), position setting of the scanning window (step S3), extraction of the partial region (step S4), generation of the minimum boundary box MVB (step S5), and area calculation thereof (step S6) are performed. Then, steps S1 to S7 and S11 are repeated such that the presence or absence of occurrence of the miswinding is determined by the area (step S7), and when it is determined that the miswinding has not occurred (step S7; No), scanning end determination is performed (step S11). In a case where it is determined that miswinding has occurred by this repetition (step S7; Yes), the position of the scanning window W at the time of occurrence and the number of times of continuation are stored (step S8). When the number of times of continuation exceeds the threshold value (step S9; Yes), the notification unit 16 makes a notification that the miswinding has occurred (step S10).

As described above, when the scanning is ended (step S11; Yes), the image processing device 20 determines whether the winding has been completed (step S12). In a case where it is determined that the winding has been completed (step S12; Yes), the image processing device 20 ends the process.

As shown in Figs. 8A to 8F, in a state where the wire rope 3 is normally wound around the drum 2 and no miswinding occurs, when the scanning window W is scanned, the area ($a \times b$) of the minimum boundary box MVB indicated by the solid line is equal to or less than the reference boundary box $2 \times k \times k$ (the area indicated by the dotted line) indicated by the dotted line. In this case, the determination unit 15 determine that the miswinding has not occurred. In this case, the step generated in the outline of the wire rope 3 is limited to that at the position where the wire rope 3 is currently wound. Since this step is about the diameter of the wire rope 3, the area of the minimum boundary box MVB is not larger than the reference boundary box $2 \times k \times k$ corresponding to the two wire ropes 3.

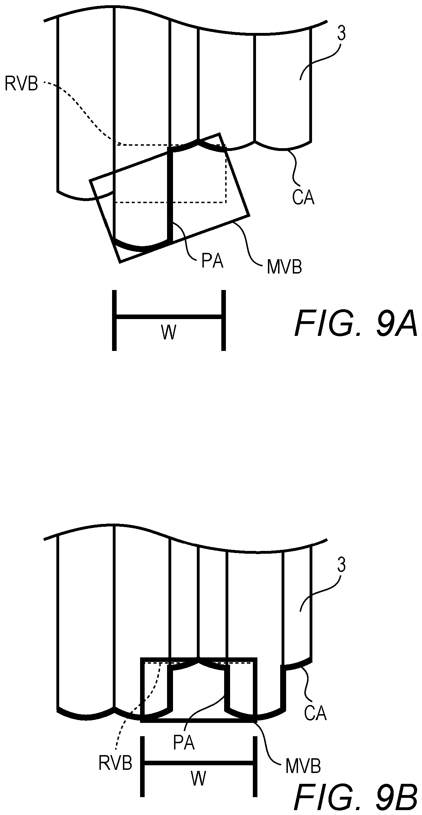

On the other hand, as illustrated in Fig. 9A, in a case where the wire rope 3 wound around the drum 2 rides on another rope, the area ($a \times b$) of the minimum boundary box MVB indicated by the solid line is larger than $2 \times k \times k$ (the area indicated by the dotted line). In a case where the wire rope 3 rides on another rope in a multiple manner, the area of the minimum boundary box MVB is further larger than $2 \times k \times k$ (the area indicated by the dotted line). In this case, the determination unit 15 determines that the miswinding has occurred.

In addition, as illustrated in Fig. 9B, in a case where a space is generated between the winding positions and a gap between ropes is generated, the area ($a \times b$) of the minimum boundary box MVB indicated by the solid line is larger than the area ($2 \times k \times k$) indicated by the dotted line. In this case, the determination unit 15 determines that the miswinding has occurred.

In addition, even in a case where looseness of the wire rope 3 wound around the drum 2 occurs, the outline of the wire rope 3 is similar to the state illustrated in Fig. 9A or 9B, and the determination unit 15 determines that the miswinding has occurred in the wire rope 3.

In the present embodiment, in a case where it is continuously determined a plurality of times that the miswinding has occurred at the same place, the notification unit 16 notifies the operator that the miswinding has occurred. In other words, in a case where the state in which the area ($a \times b$) of the minimum boundary box MVB is larger than the area ($2 \times k \times k$) of the reference boundary box RVB continues, the determination unit 15 causes the notification unit 16 to make a notification of occurrence of the miswinding. As a result, it is possible to suppress erroneous detection of occurrence of miswinding caused by instantaneous single occurrence of riding of the wire rope 3 or a step due to a gap between ropes. However, a plurality of times of (a certain period of time) continuous determination is not always necessary as the notification condition. For example, when the occurrence of the miswinding occurs even once, the notification unit 16 may notify the operator of the occurrence.

(Second embodiment)

Next, a second embodiment of the present invention will be described. The configuration of the miswinding detection device 1 according to the present embodiment is the same as the configuration of the miswinding detection device 1 according to the first embodiment described above in that the miswinding detection device 1 includes the imaging device 10 and the image processing device 20.

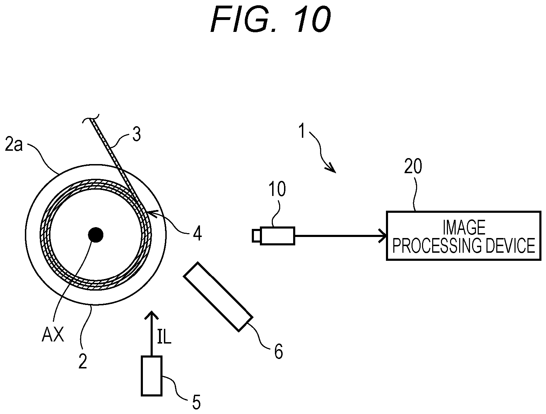

As illustrated in Fig. 10, the miswinding detection device 1 according to the present embodiment further includes a light source 5 as an illumination unit and a shade 6 as a shielding unit.

The light source 5 illuminates the outer face of the wire rope 3 so that the difference in luminance between the wire rope 3 and a portion other than the wire rope 3 in the outline region CA of the imaging data ID is large. Illumination light IL emitted from the light source 5 illuminates a portion that is an outer face of the wire rope 3 wound around the drum 2 and falls within the imaging field of view of the imaging device 10. As a result, the luminance of the wire rope 3 imaged by the imaging device 10 increases. For example, the luminance in the range of the rope region WA in the graph of Fig. 3 can be increased. Therefore, since the difference in luminance from the background region BA can be widened, the outline region CA of the wire rope 3 can be detected with high accuracy.

The shade 6 as a shielding unit is disposed between the light source 5 and the imaging device 10, and shields the illumination light IL from the light source 5. The shade 6 can prevent the illumination light IL from directly entering the outline region CA and the detection accuracy of the outline region CA of the wire rope 3 from deteriorating.

In the first and second embodiments described above, the miswinding detection device 1 includes the outline detection unit 12 that detects the outline (outline region CA) of the wire rope 3 extending in the rotation axis direction (H axis direction) of the drum 2 in the captured image (imaging data ID) of the wire rope 3 wound around the drum 2, and the determination unit 15 that calculates the degree of change (area a×b of the minimum boundary box MVB) in the detected outline in the radial direction (V axis direction) of the drum 2 and determines the occurrence of the miswinding of the wire rope 3 based on the magnitude of the calculated degree of change.

In the above-described miswinding detection device 1, the determination unit 15 calculates the area of the normalized shape including the outline of the wire rope 3 (the area a×b of the minimum boundary box MVB) as the degree of change, and compares the calculated area with the reference area (the area 2×k×k of the reference boundary box RVB) to determine the occurrence of miswinding.

Furthermore, in the above-described miswinding detection device 1, in a case where a state in which the calculated area is larger than the reference area continues, the determination unit 15 causes the notification unit 16 to make a notification of occurrence of the miswinding.

Further, in the miswinding detection device 1, the determination unit 15 calculates the degree of change for the outline (partial region PA) corresponding to the width of two wire ropes 3 in the axial direction of the drum 2 extracted from the detected outline.

As described in detail above, according to the first and second embodiments, the occurrence of the miswinding of the wire rope 3 in the drum 2 is detected based on the size of the boundary box MVB that is the smallest rectangle including the partial region PA of the outline region CA of the wire rope 3 extending in the direction of the rotation axis AX of the drum 2. This makes it possible to quickly and accurately detect the occurrence of miswinding.

Whether miswinding occurs in the wire rope 3 is determined based on whether a partial region PA that is part of the outline of the wire rope 3 is larger than a reference boundary box RVB including two wire ropes 3. That is, it is possible to detect the miswinding by simple image processing of detecting the miswinding according to the size of the figure formed by the partial region PA of the outline region CA of the wire rope 3. For comparison with the minimum boundary box MVB, the reference boundary box RVB has a normalized shape similar to that of the minimum boundary box MVB, that is, a rectangular shape in the present embodiment, the short side a is the number of pixels k corresponding to the diameter d of the wire rope 3, and the long side b is the number of pixels 2k corresponding to two of the wire ropes 3 disposed side by side. When the size of the reference boundary box RVB is set to be smaller than two wire ropes 3, there is a possibility that a step due to a phenomenon such as riding of the wire rope 3 or a gap between ropes occurring in the partial region PA cannot be reliably captured. When the size of the reference boundary box RVB is set to two or more wire ropes 3, the step can be reliably captured. However, it is optimum to set the size of the reference boundary box RVB to two wire ropes 3 in that the position where the step is generated can be accurately grasped.

Further, this determination is made based on the size of the minimum boundary box MVB having the smallest area among the rectangles that include the partial region PA of the outline region CA of the wire rope 3 and are rotatable within the imaging data ID. That is, the miswinding is detected using the minimum boundary box MVB including part of the partial region PA. When the miswinding occurs, the outline region CA of the wire rope 3 greatly changes in the V axis direction, while the outline region CA of the wire rope 3 changes in the V axis direction to some extent even when no miswinding occurs. In the above embodiment, by setting the size of the minimum boundary box MVB having the smallest area among the rectangles including the partial region PA as the determination requirement, it is possible to distinguish between a large change and a small change in the V axis direction of the wire rope 3 in a case where the miswinding has occurred. Therefore, it is possible to improve the robustness of the miswinding detection.

In addition, even in a case where the miswinding

**EP 4 480 886 A1**

has occurred, the shape of the outline region CA of the wire rope 3 varies. In the above embodiment, the shape of the outline region CA is normalized by the minimum boundary box MVB in which the angle θ is defined so as to minimize the area among the rectangles including the partial region PA of the outline region CA, and is used as the determination requirement. The rotation angle θ of the minimum boundary box MVB represents the direction in which the outlines of the two wire ropes 3 extend, and the overall direction of the partial region PA. In addition, the size of the minimum boundary box MVB is determined by how much the partial region PA changes in a direction orthogonal to the direction in which the outline thereof extends. Therefore, by using the minimum boundary box MVB including the partial region PA, it is possible to detect the miswinding with a uniform index regardless of the direction of the overall direction of the partial region PA of the wire rope 3. As a result, the robustness of the miswinding detection can be improved.

In the above embodiment, the reference boundary box RVB to be compared is sized to include two wire ropes 3. However, the present invention is not limited thereto. For example, in a case where the change in the outline of the wire rope 3 in the V axis direction is large even in a state where no miswinding occurs, the size of the reference boundary box RVB may be set to a size having a margin with respect to $2 \times k \times k$.

Depending on the distance from the optical axis of the imaging device 10, the number of pixels corresponding to the diameter d of the wire rope 3 may be different. For example, in a case where the number of pixels corresponding to the diameter d of the wire rope 3 is different between both ends and the center of the drum 2, k having a different value may be used for the determination according to the number of pixels corresponding to each diameter d.

Further, in the above embodiment, the scanning window W is shifted pixel by pixel. However, the present invention is not limited thereto. The scanning window W may be shifted by two or more pixels. For example, the length by which the scanning window W is shifted may be about half the diameter d of the wire rope 3.

In the above embodiment, as illustrated in Fig. 3, the region where the luminance is equal to or higher than threshold value BL and equal to or lower than threshold value BH is detected as the outline region CA. However, the present invention is not limited thereto. For example, a luminance change amount may be set in advance as a threshold value, and a pixel region having a luminance change amount corresponding to the set threshold value may be detected as the outline region CA. The present invention is not limited to the method of detecting the outline region CA.

In the above embodiment, regardless of the winding position 4 of the wire rope 3 on the drum 2, the occurrence of the miswinding is determined for the outline of the wire rope 3 wound from the -H end to the +H end of the drum 2 for one imaging data ID. However, the present invention is not limited thereto. The occurrence of miswinding may be detected only for an outline near the winding position 4 of the wire rope 3.

In the above embodiment, the wire rope 3 is wound from the -H end to the +H end of the drum 2. However, the wire rope 3 may be wound from the +H end to the -H end of the drum 2.

The hardware configuration and the software configuration of the miswinding detection device 1 are examples, and can be arbitrarily changed and modified.

A central portion that performs a process of the miswinding detection device 1 including the CPU 21, the main storage unit 22, the external storage unit 23, the camera 24, the display 25, the sound output unit 26, and the like can be realized using a general computer system without using a dedicated system. For example, the miswinding detection device 1 that executes the processing may be configured by storing a computer program for executing the operation in a computer-readable recording medium (flexible disk, CD-ROM, DVD-ROM, etc.) and distributing the computer program, and installing the computer program in the computer. Alternatively, the computer program may be stored in a storage device of a server device on a communication network such as the Internet, and a general computer system may download the computer program to configure the miswinding detection device 1.

In a case where the function of the miswinding detection device 1 is realized by sharing an operating system (OS) and an application program or by cooperation of the OS and the application program, only the application program portion may be stored in a recording medium or a storage device.

It is also possible to superimpose a computer program on a carrier wave and distribute the superimposed program via a communication network. For example, the computer program may be posted on a bulletin board system (BBS) on a communication network, and the computer program may be distributed via the network. Then, the computer program may be activated and executed in the same manner as other application programs under the control of the OS so that the above-described processing can be executed.

The present invention enables various embodiments and modifications without departing from the broad spirit and scope of the present invention. In addition, the above-described embodiments are for describing the present invention, and do not limit the scope of the present invention. That is, the scope of the present invention is indicated by the claims rather than the embodiments. Various modifications made within the scope of the claims and within the scope of the meaning of the invention equivalent thereto are regarded as being within the scope of the present invention.

The entire disclosure of the specification, drawings, and abstract included in Japanese Patent Application No. 2022-21546 filed on February 15, 2022 is incorporated herein by reference.

Industrial Applicability

The present invention is applicable to detection of occurrence of miswinding of a wire rope in a winch drum.

Reference Signs List

| | |
|---|---|
| 1 | miswinding detection device |
| 2 | drum |
| 2a | flange |
| 3 | wire rope |
| 4 | winding position |
| 5 | light source |
| 6 | shade |
| 10 | imaging device |
| 11 | imaging data acquisition unit |
| 12 | outline detection unit |
| 13 | partial region extraction unit |
| 14 | boundary box generation unit |
| 15 | determination unit |
| 16 | notification unit |
| 20 | image processing device |
| 21 | CPU |
| 22 | main storage unit |
| 23 | external storage unit |
| 24 | camera |
| 25 | display |
| 26 | sound output unit |
| 28 | internal bus |
| 29 | program |
| AX | rotation axis |
| BA | background region |
| CA | outline region |
| ID | imaging data |
| MVB | minimum boundary box |
| PA | partial region |
| RL | reference line |
| RVB | reference boundary box |
| VB | boundary box |
| VL | perpendicular line |
| W | scanning window |
| WA | rope region |

**Claims**

1. A miswinding detection device comprising:

   an outline detection unit that detects, in a captured image of a wire rope wound around a drum, an outline of the wire rope extending in a rotation axis direction of the drum; and
   a determination unit that calculates a degree of change in the detected outline in a radial direction of the drum, and determine occurrence of miswinding of the wire rope based on a magnitude of the calculated degree of change.

2. The miswinding detection device according to claim 1, wherein
   the determination unit calculates an area of a normalized shape including the outline of the wire rope as the degree of change, compares the calculated area with a reference area, and determines occurrence of the miswinding.

3. The miswinding detection device according to claim 2, wherein
   the determination unit causes a notification unit to make a notification of occurrence of the miswinding in a case where a state in which the calculated area is larger than the reference area continues.

4. The miswinding detection device according to claim 2, wherein

   the reference area is an area of a normalized shape including a cross section of two wire ropes, and wherein
   the determination unit calculates the degree of change in an outline extracted from the detected outline and corresponding to a width of two wire ropes in the rotation axis direction.

5. The miswinding detection device according to claim 1, wherein

   the outline detection unit detects an outline region extending in the rotation axis direction of the wire rope wound around the drum as the outline, wherein
   the miswinding detection device further comprises:

      an imaging unit that is disposed in a direction intersecting with the rotation axis direction and captures an image of the wire rope to obtain the captured image,
      a partial region extraction unit that scans a scanning window having a certain length in the rotation axis direction with respect to the outline region detected by the outline detection unit and extracts a partial region included in a section corresponding to the scanning window from the outline region, and
      a boundary box generation unit that generates, each time a partial region is extracted by the partial region extraction unit, a minimum boundary box having a minimum area among boundary boxes each including the extracted partial region and having a rectangular shape rotatable in a two-dimensional plane of imaging data of the captured image, and wherein
the determination unit determines whether miswinding occurs in the wire rope based on an area of the minimum boundary box generated by the boundary box generation unit.

6. The miswinding detection device according to claim 5, wherein

a length of the scanning window is 2k where a number of pixels of the imaging data corresponding to a diameter of the wire rope is k, and wherein
the determination unit
determines that miswinding has occurred in the wire rope in a case where a size of a minimum boundary box generated by the boundary box generation unit exceeds $2\times k\times k$.

7. The miswinding detection device according to claim 6, comprising
a notification unit that makes a notification that miswinding has occurred in the wire rope in a case where a state in which the determination unit determines that the size of the minimum boundary box exceeds $2\times k\times k$ continues for a certain period of time.

8. The miswinding detection device according to claim 1, comprising
an illumination unit that illuminates an outer face of the wire rope so that a difference in luminance between the wire rope and a portion other than the wire rope in an outline region of the captured image is large.

9. The miswinding detection device according to claim 8, comprising:

an imaging unit that is disposed in a direction intersecting with the rotation axis direction and captures an image of the wire rope wound around the drum to obtain the captured image; and
a shielding unit that is disposed between the illumination unit and the imaging unit and shields illumination light from the illumination unit.

10. A miswinding detection method executed by a miswinding detection device, the miswinding detection method comprising:

an outline detection step of detecting, in a captured image of a wire rope wound around a drum, an outline of the wire rope extending in a rotation axis direction of the drum; and
a determination step of calculating a degree of change in the detected outline in a radial direction of the drum, and determining occurrence of miswinding of the wire rope based on a magnitude of the calculated degree of change.

# FIG. 1

IMAGING DATA
ACQUISITION UNIT

OUTLINE
DETECTION UNIT

PARTIAL REGION
EXTRACTION UNIT

BOUNDARY BOX
GENERATION UNIT

DETERMINATION
UNIT

NOTIFICATION
UNIT

## FIG. 2

# FIG. 3

# FIG. 4

*FIG. 5A*

*FIG. 5B*

# FIG. 6

# FIG. 7

```
┌─────────────────────────────────────┐
│   MISWINDING DETECTION PROCESS       │
└─────────────────────────────────────┘
                  │
                  ▼
        ┌──────────────────────┐  S1
        │  ACQUIRE IMAGING DATA │
        └──────────────────────┘
                  │
                  ▼
        ┌──────────────────────┐  S2
        │ DETECT OUTLINE REGION │
        └──────────────────────┘
                  │
                  ▼
        ┌──────────────────────┐  S3
        │   SET SCANNING        │
        │   WINDOW POSITION     │
        └──────────────────────┘
                  │
                  ▼
        ┌──────────────────────┐  S4
        │ EXTRACT PARTIAL REGION│
        └──────────────────────┘
                  │
                  ▼
        ┌──────────────────────┐  S5
        │  GENERATE MINIMUM     │
        │  BOUNDARY BOX         │
        └──────────────────────┘
                  │
                  ▼
        ┌──────────────────────┐  S6
        │   CALCULATE AREA      │
        └──────────────────────┘
                  │
                  ▼               S7
        No  ◇ MISWINDING ◇
       ◄─────  OCCURRED?
                  │ Yes
                  ▼               S8
        ┌──────────────────────┐
        │ STORE OCCURRENCE      │
        │ POSITION, STORE A     │
        │ NUMBER OF TIMES OF    │
        │ CONTINUATION          │
        └──────────────────────┘
                  │
        S9        ▼
        ◇ NUMBER OF TIMES ◇  No
          EXCEEDED THRESHOLD ─────►
              VALUE?
                  │ Yes
        S10       ▼
        ┌──────────────────────┐
        │   MAKE NOTIFICATION   │
        └──────────────────────┘
                  │
        S11       ▼
        ◇ SCANNING ENDED? ◇  No ─────►
                  │ Yes
        S12       ▼
        No  ◇ WINDING ENDED? ◇
       ◄─────
                  │ Yes
                  ▼
              ┌───────┐
              │  END  │
              └───────┘
```

*FIG. 8A*

*FIG. 8B*

*FIG. 8C*

*FIG. 8D*

*FIG. 8E*

*FIG. 8F*

RVB

3

CA

PA — MVB

W

*FIG. 9A*

3

CA

PA

RVB

MVB

W

*FIG. 9B*

# FIG. 10

# INTERNATIONAL SEARCH REPORT

| International application No. |
|---|
| **PCT/JP2023/004418** |

## A. CLASSIFICATION OF SUBJECT MATTER

**B66D 1/54**(2006.01)i
FI: B66D1/54 A

According to International Patent Classification (IPC) or to both national classification and IPC

## B. FIELDS SEARCHED

Minimum documentation searched (classification system followed by classification symbols)

B66D1/54, G01N21/952

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | JP 2020-125162 A (KOBELCO CONSTRUCTION MACHINERY LIMITED) 20 August 2020 (2020-08-20) paragraphs [0062]-[0123], fig. 5, 6 | 1, 10 |
| Y | | 8 |
| A | | 2-7, 9 |
| Y | CN 108190774 A (CENTRAL SOUTH UNIVERSITY) 22 June 2018 (2018-06-22) paragraphs [0044]-[0048], fig. 1-5 | 8 |
| A | | 1-7, 9-10 |
| A | JP 2021-128352 A (TADANO LIMITED) 02 September 2021 (2021-09-02) entire text, all drawings | 1-10 |
| A | CN 214141355 U (SINOHYDRO JIAJIANG HYDRAULIC MACHINERY COMPANY LIMITED) 07 September 2021 (2021-09-07) entire text, all drawings | 1-10 |
| A | JP 2020-023391 A (TADANO LIMITED) 13 February 2020 (2020-02-13) entire text, all drawings | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 April 2023** | **09 May 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2023/004418** |

| Patent document cited in search report | | | Publication date (day/month/year) | Patent family member(s) | Publication date (day/month/year) |
| --- | --- | --- | --- | --- | --- |
| JP | 2020-125162 | A | 20 August 2020 | (Family: none) | |
| CN | 108190774 | A | 22 June 2018 | (Family: none) | |
| JP | 2021-128352 | A | 02 September 2021 | (Family: none) | |
| CN | 214141355 | U | 07 September 2021 | (Family: none) | |
| JP | 2020-023391 | A | 13 February 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002087763 A
- JP 6027873 A

- JP 2022021546 A